(19) Europäisches Patentamt
European Patent Office
Office européen des brevets

(11) **EP 3 102 361 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **15705776.1**

(22) Anmeldetag: **04.02.2015**

(51) Internationale Patentklassifikation (IPC):
**B23K 26/14** (2014.01)   **G01B 21/14** (2006.01)
**G01B 11/12** (2006.01)   **B23K 26/03** (2006.01)

(52) Gemeinsame Patentklassifikation (CPC):
**B23K 26/1494; B23K 26/032; G01B 11/24;**
**G06T 7/0004; G06T 7/11; G06T 7/174;**
G06T 2207/20224; G06T 2207/30164

(86) Internationale Anmeldenummer:
**PCT/EP2015/052238**

(87) Internationale Veröffentlichungsnummer:
**WO 2015/117979 (13.08.2015 Gazette 2015/32)**

(54) **VERFAHREN ZUM IDENTIFIZIEREN EINER RANDKONTUR EINER AN EINEM BEARBEITUNGSKOPF GEBILDETEN ÖFFNUNG UND BEARBEITUNGSMASCHINE**

METHOD FOR IDENTIFYING AN EDGE CONTOUR OF AN OPENING ON A MACHINING HEAD, AND MACHINING TOOL

PROCÉDÉ POUR IDENTIFIER LE CONTOUR DE BORD D'UNE OUVERTURE FORMÉE SUR UNE TÊTE D'USINAGE ET MACHINE D'USINAGE ASSOCIÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2014 DE 102014202176**

(43) Veröffentlichungstag der Anmeldung:
**14.12.2016 Patentblatt 2016/50**

(73) Patentinhaber: **Trumpf Werkzeugmaschinen GmbH + Co. KG**
**71254 Ditzingen (DE)**

(72) Erfinder:
• **REGAARD, Boris**
**70499 Stuttgart (DE)**
• **NEUDECK, Sebastian**
**71640 Ludwigsburg (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
EP-A1- 1 211 015    EP-A2- 1 600 247
FR-A1- 2 911 081    US-A1- 2013 319 980

**Beschreibung**

Die vorliegende Erfindung betrifft ein Verfahren zum Identifizieren einer Randkontur einer an einem Bearbeitungskopf gebildeten Öffnung, insbesondere der Randkontur einer Öffnung einer Bearbeitungsdüse. Die Erfindung betrifft auch eine Bearbeitungsmaschine gemäß dem Oberbegriff von Anspruch 16. Eine derartige Bearbeitungsmaschine ist aus der US 2013/319980 A1 bekannt geworden. Bearbeitungsdüsen, insbesondere Schneiddüsen, werden bei Laserbearbeitungs-, insbesondere bei Laserschneidprozessen zum Erreichen eines gleichmäßigen und hochwertigen Schnittergebnisses eingesetzt. Die Öffnungsgeometrie der Bearbeitungsdüse, insbesondere die Randkontur der Öffnung der Bearbeitungsdüse, durch die der Laserstrahl und ein Prozessgasstrahl hindurchtritt, wirkt sich unmittelbar auf die Gasströmung aus und beeinflusst somit in direkter Weise das Bearbeitungsergebnis. Bei dem Bearbeitungsprozess erfolgt ein Verschleiß der Bearbeitungsdüse, der beispielsweise in anhaftender Schlacke und anhaftenden Spritzern der Schmelze des bearbeiteten Materials oder in Ausbrennungen durch streifende oder rückreflektierte Laserstrahlung sowie Kollisionen der Bearbeitungsdüse mit dem Werkstück oder mit anderen Bauteilen erzeugt werden kann. Durch den Verschleiß kann sich die Randkontur der Bearbeitungsdüse verändern und von einer beispielsweise (kreis-)runden Geometrie abweichen, was ein richtungsabhängig variierendes Schnittergebnis zur Folge haben kann.

Um den negativen Folgen auf das Schneidergebnis zu begegnen, ist es bekannt, die Bearbeitungsdüse bzw. deren Öffnung nach einer Kollision manuell durch einen Bediener zu überprüfen. Dies bedingt jedoch zeit- und kostenintensive Standzeiten der Laserbearbeitungsmaschine.

Aus der DE 43 36 136 A1 sind ein Verfahren und eine Vorrichtung zum Erfassen des Bearbeitungszustandes einer Laserstrahlbearbeitungsvorrichtung bekannt geworden. Das Auftreten spontaner Materialabtragsprozesse kann durch Messen der von einem Werkstück ausgehenden, durch ein so genanntes Rüsselloch eines Schneidkopfes hindurch tretenden Strahlung detektiert werden. Auch kann ein Versatz des Schneidkopfrüssels von der Strahlachse des Laserstrahls erfasst und falls erforderlich kompensiert werden.

Aus der EP 1 600 247 A2 ist es bekannt, eine Schneiddüsenmündung mittels einer optischen Überprüfungseinrichtung zu überprüfen. Die Überprüfung der Schneiddüse erfolgt durch Beleuchten der Schneiddüse von außen bzw. von unten. Es werden Bilder der Schneiddüse mittels einer Kamera aufgenommen und der Durchmesser der Düsenöffnung bzw. dessen Mittelwert bestimmt. Falls die Unrundheit der Öffnung der Schneiddüse außerhalb eines Toleranzbereichs liegt, kann ein Alarm ausgelöst werden.

Aufgabe der Erfindung

Der vorliegenden Erfindung liegt die Aufgabe zugrunde, ein Verfahren und eine Bearbeitungsmaschine anzugeben, mittels derer die Nachteile des Standes der Technik überwunden werden können. Insbesondere soll die Robustheit der Identifikation der Randkontur gegenüber Störungen verbessert werden.

Gegenstand der Erfindung

Diese Aufgabe wird gelöst durch ein Verfahren zum Identifizieren einer Randkontur einer an einem Bearbeitungskopf gebildeten Öffnung, insbesondere einer Öffnung einer Bearbeitungsdüse, umfassend: zeitlich aufeinander folgendes Aufnehmen von mehreren Bildern, die jeweils einen Teilbereich einer durch die Öffnung hindurch beobachteten, vom Bearbeitungskopf beabstandeten, bevorzugt beleuchteten Referenzfläche sowie einen die Öffnung umgebenden Bereich an dem Bearbeitungskopf enthalten, wobei zwischen den Aufnahmezeitpunkten der Bilder die Helligkeitseigenschaften der Referenzfläche verändert werden, sowie Identifizieren der Randkontur durch vergleichendes Auswerten der aufgenommenen Bilder.

Ein mit dem erfindungsgemäßen Verfahren verbundener Vorteil liegt darin, dass eine hauptzeitparallele, d.h. zeitgleich mit dem Bearbeitungsprozess stattfindende, Durchführung des Verfahrens möglich ist. Auf diese Weise können gegebenenfalls auftretende Defekte (beispielsweise eine Verformung der Öffnung des Bearbeitungskopfes durch eine Kollision des Bearbeitungskopfes mit einem Werkstück) sofort erkannt werden und ein frühes Eingreifen bzw. Reagieren darauf ist möglich, um bei der weiteren Werkstückbearbeitung die Bildung von Ausschuss zu vermeiden. Durch das vergleichende Auswerten kann zudem eine erhöhte Genauigkeit bei der Identifikation der Randkontur sowie eine hohe Robustheit der Identifikation gegenüber Störungen, wie beispielsweise im Inneren der Öffnung auftretenden Reflexionen, erreicht werden, wie nachfolgend erläutert wird.

Für die Identifizierung der Randkontur einer Öffnung an dem Bearbeitungskopf ist es erforderlich, einen Helligkeitskontrast zwischen Bildbereichen zu erzeugen, die der Öffnung zugeordnet sind, und Bildbereichen, die dem Bearbeitungskopf zugeordnet sind. Dieser Helligkeitskontrast wird üblicher Weise durch eine Beleuchtung der Öffnung der Bearbeitungsdüse von innen oder von außen oder durch eine externe homogene Beleuchtungseinrichtung erzeugt, die von der Öffnung der Bearbeitungsdüse begrenzt wird. Beispielsweise kann eine externe Beleuchtung durch eine LED-Beleuchtung erfolgen, die mit Hilfe einer Diffusorplatte eine möglichst gleichmäßige Ausleuchtung der Öffnung der Bearbeitungsdüse erzeugt. Ist - wie oben beschrieben - eine hauptzeitparallele Erfassung gewünscht, so muss die Oberfläche des zu bearbeitenden Werkstücks beleuchtet werden. Dies kann beispielsweise durch eine koaxial mit dem Laserstrahl bzw. der Beobachtung eingekoppelten Beleuchtungsstrahlung einer LED, Laserdiode oder anderen Leuchtquelle erfolgen. Eine solche Beleuchtung der rauen (metallischen) Werkstück- bzw. Düsenoberfläche erfolgt im Allgemeinen nicht vollständig homogen, da der Reflexionsgrad stark von der Richtung bzw. vom Winkel der lokalen Flächennormale der Oberfläche abhängig ist (vgl. hierzu beispielsweise die DE 102005010381). Dadurch ergeben sich Bereiche am Rand der Öffnung, die in einer automatisierten Bildverarbeitung nicht eindeutig der Bearbeitungsdüse oder der Öffnung zugeordnet werden können.

Durch das Heranziehen von zwei oder mehr Bildern für die Auswertung bzw. die Bildverarbeitung kann die Identifikation der Randkontur verbessert werden, wenn wie hier vorgeschlagen der Bearbeitungskopf bzw. die Bearbeitungsdüse mit konstanten Lichtverhältnissen beleuchtet wird, während die durch die Öffnung beobachtete Referenzfläche zwischen den Aufnahmen der Bilder in ihren Helligkeitseigenschaften verändert wird. Auf diese Weise können beim vergleichenden Auswerten Bereiche identifiziert werden, die in allen aufgenommenen Bildern die gleiche bzw. eine ähnliche Helligkeit aufweisen und der Bearbeitungsdüse bzw. dem Bearbeitungskopf zugeordnet werden. Weiterhin können Bereiche identifiziert werden, die sich zwischen den Aufnahmen verändern und der Öffnung an dem Bearbeitungskopf bzw. an der Bearbeitungsdüse zugeordnet werden. Durch die Berücksichtigung einer Mehrzahl von Bildern bei der Auswertung kann die Genauigkeit bei der Erkennung der Randkontur sukzessive erhöht werden.

Bei einer bevorzugten Variante werden zum Verändern der Helligkeitseigenschaften die Referenzfläche und der Bearbeitungskopf insbesondere in einer Richtung quer zur Öffnung, d.h. lateral, relativ zueinander bewegt. Die Referenzfläche weist wie jede Oberfläche eine Rauigkeit bzw. Unebenheiten auf. Durch die Relativbewegung wird in den nacheinander aufgenommenen Bildern ein jeweils unterschiedlicher Teilbereich der Referenzfläche durch die Öffnung hindurch beobachtet, so dass durch die Rauigkeit der Referenzfläche bedingte ortsabhängige Helligkeitsunterschiede durch mehrere nacheinander aufgenommene Bilder bewegt werden. Die Beleuchtung der Referenzfläche erfolgt bevorzugt homogen aus einer senkrecht oder nahezu senkrecht zur Referenzfläche verlaufenden Richtung, beispielsweise durch die Öffnung der Bearbeitungsdüse hindurch oder in Form einer ringförmigen Beleuchtung, welche die Bearbeitungsdüse umgibt.

Bei einer weiter bevorzugten Variante bildet die Referenzfläche eine Oberfläche eines zu bearbeitenden Werkstücks. Diese Variante ist besonders vorteilhaft, da die erfindungsgemäße Identifizierung der Randkontur der Öffnung während der Werkstückbearbeitung stattfinden kann. Wie oben beschrieben wurde, weist die Oberfläche des in der Regel metallischen Werkstücks eine ausreichende Rauigkeit auf, so dass in den aufgenommenen Bildern eine Bewegung der durch die Relativbewegung zwischen Werkstück und Bearbeitungskopf bedingten Helligkeitsunterschiede der rauen Werkstückoberfläche gemessen werden kann.

Bevorzugt ist auch eine Variante, bei der zum Verändern der Helligkeitseigenschaften der Referenzfläche die Beleuchtung der Referenzfläche zeitlich verändert wird. Zur zeitlichen Veränderung der Helligkeitseigenschaften kann die Beleuchtungsintensität einer Beleuchtungseinrichtung über unterschiedliche Aufnahmezeitpunkte hinweg variiert werden und/oder es kann ein Beleuchtungsmuster mit über die Aufnahmezeitpunkte hinweg lokal variierenden Beleuchtungsintensitäten vorgesehen sein. Alternativ kann auch die von der Referenzfläche selbst ausgehende bzw. reflektierte Beleuchtungsstrahlung in ihren Helligkeitseigenschaften verändert werden, indem zum Beispiel deren Beleuchtungsintensität über die Aufnahmezeitpunkte hinweg zeitlich und/oder lokal verändert wird. In jedem dieser Fälle kann gegebenenfalls auf eine Relativbewegung der Referenzfläche zum Bearbeitungskopf verzichtet werden.

Bevorzugt werden bei einer weiteren Variante die Bilder entlang einer Beobachtungsrichtung koaxial zu einem durch die Öffnung hindurch tretenden Bearbeitungsstrahl, insbesondere einem Laserstrahl, aufgenommen. Da die Beobachtungsrichtung in diesem Fall typischerweise senkrecht zur Randkontur der Öffnung verläuft, ist eine genaue Identifikation der Randkontur möglich. Auch lassen sich aus der koaxial zum Bearbeitungsstrahl verlaufenden Beobachtungsrichtung gegebenenfalls vorhandene Defekte bzw. Abweichungen der Randkontur besonders leicht erkennen.

Bei einer bevorzugten Variante erfolgt die Beleuchtung der Referenzfläche entlang einer Beleuchtungsrichtung koaxial bzw. annähernd koaxial zu einem durch die Öffnung hindurch tretenden Bearbeitungsstrahl, insbesondere einem Laserstrahl. Auf diese Weise erfolgt die Beleuchtung der Referenzfläche durch die Öffnung hindurch, d.h. von innen nach außen. Eine (zusätzliche) äußere Beleuchtungseinrichtung ist in diesem Fall nicht erforderlich. Die Beleuchtungsstrahlung und der Bearbeitungs- bzw. Laserstrahl überlagern sich in diesem Fall typischer Weise zumindest teilweise.

Bevorzugt ist eine Variante, bei der beim vergleichenden Auswerten mindestens ein Differenzbild aus zwei der aufgenommenen Bilder gebildet wird. Beim Erzeugen des Differenzbildes werden stationäre Störungen (z.B. interne Reflexionen an der Bearbeitungsdüse) subtrahiert, so dass lediglich Helligkeitsänderungen an der beobachteten Referenzfläche erhalten bleiben, die beispielsweise auf die Bewegung der Referenzfläche zurückzuführen sind. Das oder die Differenzbilder werden in der Regel jeweils durch absolutes, insbesondere pixelweises, Subtrahieren der Bilder erzeugt. Für jeden Aufnahmezeitpunkt n kann genau ein Differenzbild $D(n)$ durch Subtraktion mit einem zu einem früheren Zeitpunkt n - m aufgenommenen Bild $B(n - m)$ erzeugt werden (m = 1, 2, ...). Es ist aber auch möglich, für einen Aufnahmezeitpunkt n mehrere Differenzbilder $D_m(n)$ zu erzeugen, die jeweils aus dem zu dem Aufnahmezeitpunkt n aufgenommenen Bild B(n) und einem zu einem früheren Zeitpunkt n - m aufgenommenen Bild B(n-m) durch pixelweise Subtraktion erhalten werden, d.h. es gilt: $D_m(n) = B(n) - B(n-m)$, mit m = 1, 2, ....

In einer Weiterbildung werden die Bilder vor dem Bilden des mindestens einen Differenzbildes mittels eines Bildbearbeitungsalgorithmus bearbeitet. Eine solche Vorverarbeitung vor der pixelweisen Subtraktion kann günstig sein, um geringe Bildlage- oder Helligkeitsänderungen (Fluktuationen) auszugleichen, die zwischen zwei Aufnahmezeitpunkten auftreten und das gesamte aufgenommene Bild beeinflussen, d.h. auch den Bildbereich, der dem Bearbeitungskopf bzw. dem Bereich außerhalb der Öffnung zugeordnet ist. Beispielsweise kann es zu geringfügigen Änderungen der Position der Detektorfläche der Bilderfassungseinrichtung kommen, die zu einer Verschiebung des aufgenommenen Bildes relativ zur Detektorfläche führt. Eine solche Verschiebung kann durch eine Kreuzkorrelation zwischen den aufgenommenen Bildern erkannt und durch eine geeignete Bildverschiebung korrigiert werden. Helligkeitsfluktuationen zwischen den aufgenommenen Bildern, die beispielsweise durch das Hintergrundrauschen verursacht werden, können durch eine geeignete Filterung, beispielsweise unter Verwendung eines Median- oder Mittelwertfilters ausgeglichen werden.

Besonders bevorzugt ist eine Variante, bei der aus mindestens zwei Differenzbildern ein Ergebnisbild E(n) erzeugt wird, an dem die Identifizierung der Randkontur erfolgt. Ein solches Ergebnisbild kann beispielsweise durch eine ggf. gewichtete Addition mehrerer Differenzbilder erzeugt werden. Die Erzeugung eines solchen Ergebnisbildes ermöglicht es, auch Differenzbilder bei der Identifikation der Randkontur zu berücksichtigen, die aus Bildern berechnet wurden, die nicht mehr in dem Ringspeicher zur Verfügung stehen.

In einer Weiterbildung wird das Ergebnisbild E(n) aus einer vorgegebenen Anzahl m an zu aufeinanderfolgenden Aufnahmezeitpunkten n, n-1, ..., n-m+1 aufgenommenen Bildern B(n) gemäß der Formel: E(n) = B(n) - B(n-1) + B(n) - B(n-2) + ... + B(n) - B(n-m+1), d.h. $E(n) = D_1(n) + D_2(n) + ... + D_{m-1}(n)$ gebildet. Hierdurch kann eine in Bezug auf die Rechenzeit effektive Analyse der aufgenommenen Bilder erfolgen. Die vorgegebene Anzahl m von Bildern zur Bildung des Ergebnisbildes kann beispielsweise in einem Ringspeicher vorgehalten werden.

Bei einer anderen Weiterbildung wird das Ergebnisbild E(n) als gleitender Mittelwert einer vorgegebenen Anzahl m von zu unterschiedlichen Aufnahmezeitpunkten n, n-1,... aufgenommenen Differenzbildern erzeugt. Die Bestimmung des Ergebnisbildes E(n) als gleitender Mittelwert erfolgt typischerweise nach der Formel E(n) = 1/m*(D(n) + D(n-1) + .... + D(n-m+1)), wobei die Normierung (1 / m) ggf. entfallen kann.

Bei einer anderen Weiterbildung wird das Ergebnisbild E(n) gemäß der Formel: E(n) = $\alpha$*E(n-1) + (1-$\alpha$)*D(n) erzeugt, wobei $\alpha$ eine Konstante ist, die als Abklingfaktor dient, wobei gilt 0 < $\alpha$ < 1 und D(n) ein Differenzbild bezeichnet. Für den Fall, dass $\alpha$ < 0,5 ist, werden ältere Differenzbilder bei der Erzeugung des Ergebnisbildes E(n) weniger stark gewichtet als neuere Differenzbilder. Ein geeigneter Wert für den Abklingfaktor $\alpha$ kann empirisch bestimmt werden. Für den Fall, dass $\alpha$ = 0 ist, entspricht das Ergebnisbild E(n) dem Differenzbild D(n) zum aktuellen Aufnahmezeitpunkt n.

Bevorzugt ist ferner eine Variante, bei der zum Identifizieren der Randkontur das Ergebnisbild E(n) - oder ggf. das Differenzbild D(n) ($\alpha$ = 0, s.o.) - in ein Binärbild umgewandelt wird. Das Binärbild kann beispielsweise durch eine Schwellwertoperation, d.h. durch einen Vergleich mit einem Schwellwert, aus dem Ergebnisbild erzeugt werden. In dem Binärbild erscheint der die Öffnung umgebende Bereich typischer Weise schwarz und die Öffnung selbst weiß, da diese eine größere Helligkeit aufweist.

In einer bevorzugten Variante wird zum Identifizieren der Randkontur in dem Ergebnisbild oder in dem Binärbild ein Algorithmus zur Geometrie-Erkennung, insbesondere ein Hough-Algorithmus, ein kleinster Fehlerquadrat-Algorithmus oder ein RANSAC("random sample consensus")-Algorithmus, verwendet. Derartige Algorithmen können anhand des Ergebnisbildes bzw. des Binärbildes durch geeignete Fehlerminimierungsalgorithmen die Randkontur erkennen bzw. identifizieren.

Bevorzugt ist schließlich eine Verfahrensvariante, bei der zum Identifizieren der Randkontur zwischen zehn und fünfzig Bildern, bevorzugt zwischen zehn und vierzig Bildern aufgenommen werden. Unter der zum Identifizieren der Randkontur verwendeten Anzahl der Bilder ist diejenige Anzahl m an Bildern zu verstehen, die für die Auswertung in einem (Ring-)Speicher zur Verfügung stehen und aus denen die Differenzbilder gebildet werden. Wie weiter oben beschrieben wurde, kann durch die Erhöhung der Anzahl der aufgenommenen Bilder die Genauigkeit der Randkontur-Identifizierung sukzessive gesteigert werden. Weiterhin kann eine möglichst große Änderung der Beleuchtungsverhältnisse der Werkstückoberfläche, insbesondere in der o.g. bevorzugten Ausführungsform eine große Relativverschiebung des Werkstücks zwischen zwei aufeinander folgenden Aufnahmezeitpunkten, die Erkennungsgenauigkeit auch bei wenigen Differenzbildern verbessern.

Die Aufgabe wird auch gelöst durch eine Bearbeitungsmaschine, umfassend: einen Bearbeitungskopf, eine an einer Öffnung an dem Bearbeitungskopf, insbesondere an einer Öffnung einer an dem Bearbeitungskopf angebrachten Bearbeitungsdüse, gebildete Randkontur, eine Bilderfassungseinrichtung zur zeitlich aufeinander folgenden Aufnahme von mehreren Bildern, die jeweils einen Teilbereich der durch die Öffnung hindurch beobachteten, zum Bearbeitungskopf beabstandeten Referenzfläche sowie einen die Öffnung umgebenden Bereich an dem Bearbeitungskopf enthalten, sowie eine Auswerteeinrichtung, die zur Identifikation der Randkontur durch vergleichende Auswertung der aufgenommenen Bilder ausgebildet bzw. programmiert ist, wobei die Bearbeitungsmaschine, insbesondere die Auswerteeinrichtung und/oder eine Steuer- und/oder Regeleinrichtung der Bearbeitungsmaschine ausgebildet bzw. programmiert ist, zwischen den Aufnahmezeitpunkten der Bilder die Helligkeitseigenschaften der Referenzfläche zu verändern. Die Bearbeitungsmaschine weist eine Beleuchtungseinrichtung zur Beleuchtung der Referenzfläche entlang einer Beleuchtungsrichtung bevorzugt koaxial zu einem durch die Öffnung hindurch tretenden Bearbeitungsstrahl, insbesondere einem Laserstrahl, mit Beleuchtungsstrahlung auf, wobei die Beleuchtungseinrichtung zur zeitlichen Veränderung der Beleuchtungsintensität der Beleuchtungsstrahlung ausgebildet ist. Bei der Bearbeitungsmaschine ergeben sich hinsichtlich der erhöhten Genauigkeit bei der Identifikation der Randkontur und der hohen Robustheit gegenüber Störungen im Wesentlichen dieselben Vorteile wie bei dem erfindungsgemäßen Verfahren. Eine koaxiale Beleuchtung der Referenzfläche durch die Öffnung hindurch ist in kompakter Bauweise möglich.

Bei einer bevorzugten Ausführungsform weist die Bilderfassungseinrichtung eine Abbildungsoptik zur Aufnahme der mindestens zwei Bilder aus einer Beobachtungsrichtung bevorzugt koaxial zu einem durch die Öffnung hindurch tretenden Bearbeitungsstrahl, insbesondere einem Laserstrahl, auf. Durch eine derartige in den Bearbeitungskopf integrierte Abbildungsoptik ist der Bearbeitungskopf vergleichsweise kompakt aufgebaut. Auch ist durch eine solche integrierte Abbildungsoptik bei einer koaxial zum Bearbeitungsstrahl verlaufenden Beobachtungsrichtung eine sehr genaue Identifikation der Randkontur möglich.

Bei einer weiteren Ausführungsform weist die Bearbeitungsmaschine zusätzlich eine Werkstückauflage zur Auflage eines von dem Bearbeitungskopf beabstandeten Werkstücks auf. Die Werkstückoberfläche des Werkstücks kann in diesem Fall die Referenzfläche bilden, so dass auf das Vorsehen einer separaten Referenzfläche verzichtet werden kann. Alternativ kann jedoch ggf. in der Bearbeitungsmaschine eine separate Referenzfläche für das Identifizieren der Randkontur vorgesehen sein; allerdings ist in diesem Fall jedoch typischer Weise das Identifizieren der Randkontur während der Werkstückbearbeitung nicht möglich.

Bei einer bevorzugten Ausführungsform umfasst die Bearbeitungsmaschine zusätzlich eine Bewegungseinrichtung zum Erzeugen einer Relativbewegung zwischen dem Werkstück und dem Bearbeitungskopf. Die Bewegungseinrichtung kann beispielsweise zur Bewegung des Bearbeitungskopfs in eine oder mehrere Raumrichtungen ausgebildet sein. Alternativ oder zusätzlich kann auch das Werkstück auf der Werkstückauflage und/oder die Werkstückauflage selbst in mindestens einer Raumrichtung bewegbar sein, um die Relativbewegung zu erzeugen.

Weitere Vorteile der Erfindung ergeben sich aus der Beschreibung und der Zeichnung. Ebenso können die vorstehend genannten und die noch weiter aufgeführten Merkmale je für sich oder zu mehreren in von den Ansprüchen abgedeckten Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1     eine erfindungsgemäße Bearbeitungsmaschine mit einem Bearbeitungskopf,

Fig. 2     eine Darstellung zweier mittels einer Bilderfassungseinrichtung aufgenommener Bilder sowie eines daraus gebildeten Differenzbildes, und

Fig. 3     eine Darstellung von fünf mittels einer Bilderfassungseinrichtung aufgenommenen Bildern, einem daraus erzeugten Differenzbild sowie eines aus dem Differenzbild erzeugten Ergebnisbilds.

In der folgenden Beschreibung der Zeichnungen werden für gleiche bzw. funktionsgleiche Bauteile identische Bezugszeichen verwendet.

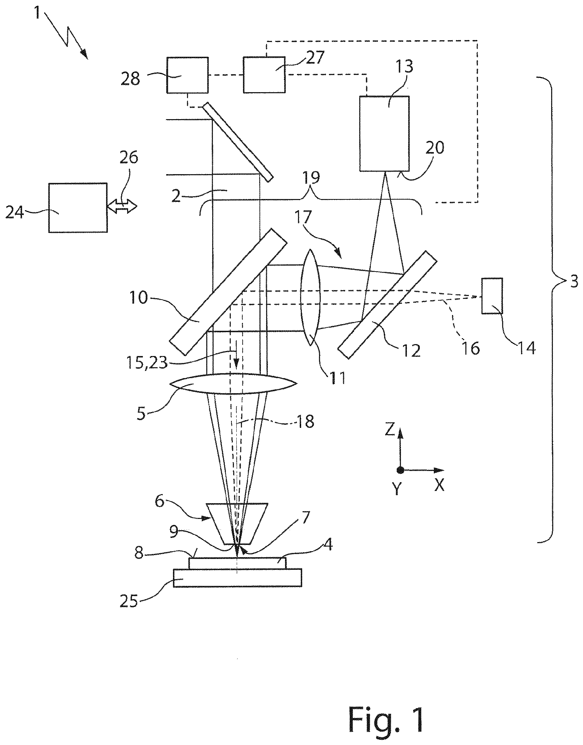

Fig. 1 zeigt einen beispielhaften Aufbau einer Bearbeitungsmaschine 1, die einen Bearbeitungskopf 3 zur Fokussierung eines Laserstrahls 2 auf ein von dem Bearbeitungskopf 3 beabstandetes Werkstück 4 umfasst. Der Laserstrahl 2 wird im gezeigten Beispiel von einem $CO_2$-Laser erzeugt. Alternativ kann der Laserstrahl 2 beispielsweise durch einen Festkörperlaser erzeugt werden. Der Laserstrahl 2 wird zur Durchführung einer Werkstückbearbeitung an dem Werkstück 4, beispielsweise in Form eines Laserschweiß- oder Laserschneidprozesses, mittels eines Fokussierelements in Form einer Fokussierlinse 5 auf das Werkstück 4 fokussiert. Der Bearbeitungskopf 3 umfasst des Weiteren eine Bearbeitungsdüse 6, wobei die Fokussierlinse 5 im gezeigten Beispiel den Laserstrahl 2 durch die Bearbeitungsdüse 6, genauer gesagt durch eine Öffnung 7 an der Innenseite der Bearbeitungsdüse 6, auf das Werkstück 4 fokussiert, und zwar im gezeigten Beispiel auf eine an der Oberseite des Werkstücks 4 gebildete Werkstückoberfläche 8. Am werkstückseitigen Ende der Öffnung 7 der Bearbeitungsdüse 6 ist eine ringförmig umlaufende Randkontur 9 gebildet. Die Werkstückoberfläche 8 des Werkstücks 4 bildet eine Referenzfläche für ein nachfolgend beschriebenes Verfahren zum Identifizieren der Randkontur 9. Das Verfahren kann ggf. auch an einer eigens zu diesem Zweck in der Bearbeitungsmaschine 1 vorgesehenen Referenzfläche durchgeführt werden, die nicht an dem Werkstück 4 gebildet ist.

In Fig. 1 ebenfalls zu erkennen ist ein teildurchlässig ausgebildeter Umlenkspiegel 10, welcher den einfallenden Laserstrahl 2 transmittiert und für eine Prozessüberwachung relevante Beobachtungsstrahlung (beispielsweise im sichtbaren Wellenlängenbereich) über eine weitere Fokussierlinse 11 auf einen weiteren teildurchlässigen Umlenkspiegel 12 reflektiert. Der weitere teildurchlässige Umlenkspiegel 12 reflektiert die Beobachtungsstrahlung zu einer als Kamera ausgebildeten Bilderfassungseinrichtung 13 des Bearbeitungskopfes 3 zur zeitlich aufeinander folgenden Aufnahme von mehreren Bildern der Werkstückoberfläche 8, d.h. die Werkstückoberfläche 8 bzw. die werkstückseitige Öffnung 7 der Bearbeitungsdüse 6 wird auf eine Detektorfläche 20 der Bilderfassungseinrichtung 13 abgebildet.

Der Bearbeitungskopf 3 umfasst weiterhin eine Beleuchtungseinrichtung 14, die der Beleuchtung der von dem Bearbeitungskopf 3 beabstandeten Werkstückoberfläche 8 bzw. Referenzfläche dient. Die Beleuchtungseinrichtung 14 ist zur Beleuchtung der Werkstückoberfläche 8 entlang einer Beleuchtungsrichtung 15 koaxial zu dem durch die Öffnung 7 hindurch tretenden Laserstrahl 2 mit Beleuchtungsstrahlung 16 ausgebildet. Die Beleuchtungsstrahlung 16 wird beispielsweise von dem weiteren teiltransmissiven Umlenkspiegel 12 transmittiert und durch die Öffnung 7 der Bearbeitungsdüse 6 hindurch auf das Werkstück 4 gelenkt. Alternativ zu den teildurchlässigen Umlenkspiegeln 10, 12 können auch polarisationsselektiver Strahlteiler, Scraperspiegel oder Lochspiegel, welche einfallende Strahlung nur aus einem Randbereich reflektieren, eingesetzt werden, um die Beobachtungsstrahlung 17 der Bilderfassungseinrichtung 13 zuzuführen bzw. um die Beleuchtungsstrahlung 16 dem Werkstück 4 zuzuführen. Auch ein oder mehrere seitlich in den Strahlengang des Laserstrahls 2 eingebrachte Spiegel bzw. Stufenspiegel können verwendet werden, um die Beobachtung zu ermöglichen.

Als Beleuchtungseinrichtung 14 können beispielsweise Diodenlaser oder LED's vorgesehen werden, die wie in Fig. 1 gezeigt koaxial, aber auch off-axis zur Laserstrahlachse 18 angeordnet werden können. Die Beleuchtungseinrichtung 14 kann beispielsweise auch außerhalb (insbesondere neben) dem Bearbeitungskopf 3 angeordnet und auf das Werkstück 4 gerichtet sein. Gegebenenfalls kann der Bearbeitungskopf 3 auch ohne eine Beleuchtungseinrichtung 14 betrieben werden.

Die Bilderfassungseinrichtung 13 ist insbesondere als eine im Beobachtungsstrahlengang 17 hinter dem weiteren teildurchlässigen Umlenkspiegel 12 angeordnete geometrisch hochauflösende Kamera ausgebildet, bei der es sich um eine Hochgeschwindigkeitskamera handeln kann. Beim dargestellten Beispiel erfolgt die Aufnahme von Bildern durch die Bilderfassungseinrichtung 13 im Auflichtverfahren im VIS-Wellenlängenbereich. Auch eine Aufnahme von Bildern im UV-oder NIR-Bereich ist möglich, um eine Auflichtbeleuchtung aufzunehmen. Bei dem in Fig. 1 gezeigten Beispiel kann ein Filter vor der Bilderfassungseinrichtung 13 angeordnet werden, wenn weitere Strahlungs- bzw. Wellenlängenanteile von der Erfassung mit der Bilderfassungseinrichtung 13 ausgeschlossen werden sollen. Der Filter kann z.B. als schmalbandiger Bandpassfilter ausgebildet sein.

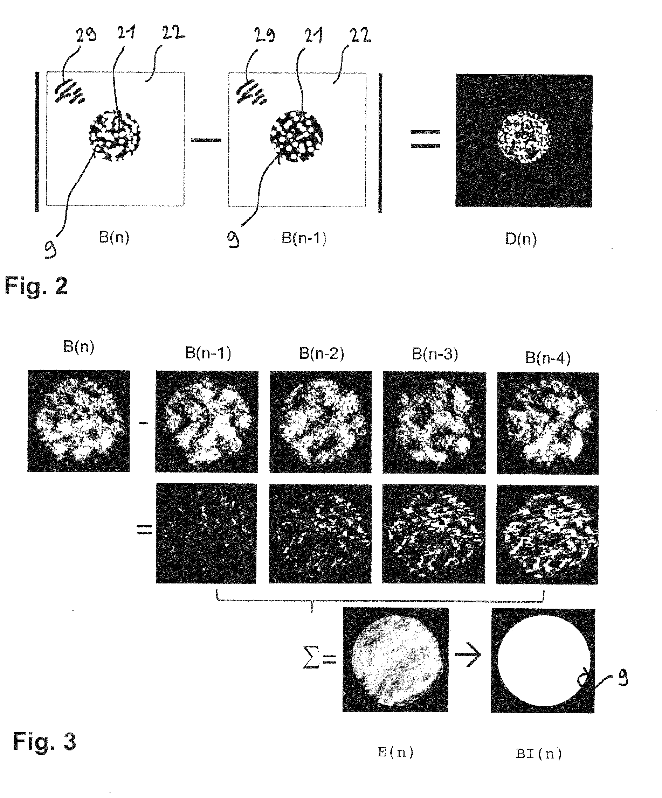

Die Bilderfassungseinrichtung 13 weist eine die beiden teildurchlässigen Umlenkspiegel 10, 12 und die weitere Fokussierlinse 11 umfassende Abbildungsoptik 19 auf, um auf der Detektorfläche 20 der Bilderfassungseinrichtung 13 Bilder B(n), B(n-1), ... (vgl. Fig. 2) zu erzeugen, die sowohl einen im Wesentlichen kreisförmigen Teilbereich 21 der durch die Öffnung 7 hindurch beobachteten und beleuchteten Werkstückoberfläche 8 als auch einen die Öffnung 7 umgebenden Bereich 22 der Bearbeitungsdüse 6 enthalten. Die Abbildungsoptik 19 dient der Aufnahme der Bilder B(n), B(n-1), ... aus einer Beobachtungsrichtung 23, die koaxial zu dem durch die Öffnung 7 hindurch tretenden Laserstrahl 2 verläuft.

Die Bearbeitungsmaschine 1 umfasst des Weiteren eine Bewegungseinrichtung 24 zum Erzeugen einer Relativbewegung zwischen dem auf einer Werkstückauflage in Form eines Werkstücktisches 25 gelagerten Werkstück 4 und dem Bearbeitungskopf 3. Im gezeigten Beispiel liegt das Werkstück 4 ortsfest auf dem Werkstücktisch 25 auf. Der beweglich gelagerte Bearbeitungskopf 3 kann mittels eines oder mehrerer Aktoren 26 der Bewegungseinrichtung 24 in den drei Raumrichtungen XYZ verfahren werden. Hierbei kann der Bearbeitungskopf 3 quer zur Öffnung 7 (in Fig. 1 in der X- und/oder Y-Richtung) bewegt werden. Es versteht sich, dass alternativ oder zusätzlich zur Bewegung des Bearbeitungskopfs 3 auch das Werkstück 4 gemeinsam mit dem Werkstücktisch 25 und/oder relativ zum Werkstücktisch 25 bewegt werden kann. Die Bearbeitungsmaschine 1 umfasst ferner eine Auswerteeinrichtung 27, beispielsweise in Form eines PCs oder dergleichen, sowie eine Steuer- bzw. Regeleinrichtung 28, die miteinander in signaltechnischer Verbindung stehen.

Nachfolgend wird anhand von Fig. 1 und Fig.2 beschrieben, wie in der Auswerteeinrichtung 27 der Bearbeitungsmaschine 1 die Randkontur 9 durch eine vergleichende Auswertung der Bilder B(n), B(n-1), ... identifiziert werden kann, die zu unterschiedlichen Aufnahmezeitpunkten n aufgenommen wurden. Die Bildrate, d.h. das Zeitintervall zwischen zwei aufeinander folgenden Aufnahmezeitpunkten, liegt typischer Weise in der Größenordnung von Millisekunden, während die Aufnahme eines einzelnen Bildes B(n) (die Belichtungszeit) deutlich schneller ist und typischer Weise im Bereich von Mikrosekunden liegt, um eine Bewegungsunschärfe des aufgenommenen Bildes B(n) zu vermeiden. Zwischen jeweils zwei der Aufnahmezeitpunkte n, n-1 der Bilder B(n), B(n-1), ... werden die Helligkeitseigenschaften der Werkstückoberfläche 8 verändert, indem z.B. die Werkstückoberfläche 8 und der Bearbeitungskopf 3 quer zur Öffnung 7 relativ zueinander bewegt werden. Hierbei wird ausgenutzt, dass die beleuchtete Werkstückoberfläche 8 wie jede Oberfläche eine Rauigkeit aufweist, so dass das Bild B(n) des beobachteten Teilbereichs 21 der Werkstückoberfläche 8 ein Muster mit ortsabhängig unterschiedlicher Helligkeit ergibt, welches in Fig.2 vereinfachend als schwarz-weißes Muster innerhalb des beobachteten Teilbereichs 21 dargestellt ist. Durch die quer zur Beobachtungsrichtung 23 erfolgende Relativbewegung zwischen der Öffnung 7 und der Werkstückoberfläche 8 verändern sich zwischen den aufeinanderfolgenden Aufnahmezeitpunkten n, n-1 die Helligkeitseigenschaften der Werkstückoberfläche 8, genauer gesagt des beobachteten Teilbereichs 21 der Werkstückoberfläche 8, wie in Fig. 2 anhand der variierenden schwarz-weißen Muster der Teilbereiche 21 der Bilder B(n), B(n-1) ersichtlich ist.

Alternativ oder zusätzlich kann zum Verändern der Helligkeitseigenschaften der Werkstückoberfläche 8 die Beleuchtung der Werkstückoberfläche 8 durch die Beleuchtungseinrichtung 14 zeitlich verändert werden. Hierzu kann die Beleuchtungsintensität der Beleuchtungsstrahlung 16 mittels der Beleuchtungseinrichtung 14 zeitlich und ggf. ortsabhängig zwischen den aufeinander folgenden Aufnahmezeitpunkten n, n-1, ... verändert werden.

Wie in Fig. 2 beispielhaft für die beiden Bilder B(n), B(n-1) gezeigt ist, wird zum Identifizieren der Randkontur 9 zunächst durch absolutes pixelweises Subtrahieren ein Differenzbild D(n) erzeugt. Dadurch werden stationäre Störungen, wie beispielswese interne Reflexionen 29 an der Bearbeitungsdüse 6, subtrahiert und lediglich Bildänderungen in den bewegten Teilbereichen 21 der Werkstückoberfläche 8 bleiben im Differenzbild D(n) erhalten. Vor der Bildung des Differenzbildes D(n) kann ggf. eine Vorverarbeitung der Bilder B(n), B(n-1) erfolgen, um den Einfluss von zwischen den Aufnahmezeitpunkten auftretenden Helligkeitsfluktuationen oder einer Bildverschiebung der gesamten Bilder B(n), B(n-1) zu kompensieren. Ein Differenzbild D(n) kann auch aus zwei Bildern B(n), B(n-m) erzeugt werden, die nicht zu zeitlich unmittelbar aufeinander folgenden Aufnahmezeitpunkten n, n - m aufgenommen werden (d.h. m = 2, 3,...).

Die Identifizierung der Randkontur 9 kann ggf. direkt anhand des Differenzbildes D(n) erfolgen. Die Identifizierung der Randkontur 9 erfolgt vorteilhafter Weise jedoch anhand eines Ergebnisbildes E(n), welches aus mindestens zwei Differenzbildern $D_m(n)$ zum selben Aufnahmezeitpunkt n bzw. aus mindestens zwei zu unterschiedlichen Aufnahmezeitpunkten n, n-1 aufgenommenen Differenzbildern D(n), D(n-1), ... erzeugt wird.

Im ersten Fall werden zu einem Aufnahmezeitpunkt n mehrere Differenzbilder $D_m(n)$ erzeugt, die jeweils aus dem zu dem Aufnahmezeitpunkt n aufgenommenen Bild B(n) und einem zu einem früheren Zeitpunkt n - m aufgenommenen Bild B(n-m) durch pixelweise Subtraktion erhalten werden, d.h. es gilt: $D_m(n) = B(n) - B(n-m)$, mit m = 1, 2, ....

In Fig. 3 ist die Bildung eines Ergebnisbilds E(n) aus einer Anzahl m von fünf nacheinander aufgenommenen Bildern B(n), B(n-1), B(n-2), B(n-3), B(n-4) dargestellt, die gemäß der Formel (hier: m= 5)

$$E(n) = B(n) - B(n-1) + B(n) - B(n-2) + \ldots + B(n) - B(n-m+1) \text{ bzw.}$$

$$E(n) = D_1(n) + D_2(n) + D_3(n) + D_4(n),$$

d.h. aus mehreren demselben Aufnahmezeitpunkt n zugeordneten Differenzbildern $D_m(n)$ erfolgt ist.

Die Anzahl der Bilder B(n), B(n-1), ..., die zur Identifikation der Randkontur 9 bzw. zur Erzeugung des Ergebnisbildes E(n) ausgewertet werden, ist typischer Weise größer als in Fig. 3 gezeigt und liegt zwischen ca. zehn und fünfzig Bildern, bevorzugt zwischen ca. zwanzig und vierzig Bildern.

Das Ergebnisbild kann alternativ beispielsweise gemäß der Formel:

$$E(n) = \alpha * E(n-1) + (1-\alpha) * D(n)$$

erzeugt werden, wobei $\alpha$ einen (in der Regel konstanten) Abklingfaktor $0 < \alpha < 1$ bezeichnet, der die Relevanz älterer Differenzbilder berücksichtigt. In diesem Fall ist jedem Aufnahmezeitpunkt n genau ein Differenzbild D(n) zugeordnet, welches wie oben beschrieben gebildet wird. Ein optimaler Wert für den Abklingfaktor $\alpha$ kann beispielsweise empirisch ermittelt werden. Zu diesem Zweck kann eine Randkontur 9 mit bekannter Geometrie vermessen werden, wobei deren Identifizierung mehrmals mit unterschiedlichen Werten für den Abklingfaktor $\alpha$ durgeführt wird. Der optimale Wert für den Abklingfaktor $\alpha$ ist derjenige Wert, bei dem die Übereinstimmung mit der bekannten Geometrie der Randkontur 9 am größten ist.

Alternativ zur Verwendung eines Abklingfaktors kann das Ergebnisbild E(n) als gleitender Mittelwert aus einer Anzahl von unterschiedlichen Aufnahmezeitpunkten n, n-1 zugeordneten Differenzbildern D(n), D(n-1), ... erzeugt werden, die einer vorgegebenen Anzahl m von Bildern B(n), B(n-1), ... entspricht, d.h. gemäß der Formel:

$$E(n) = 1/m * (D(n) + D(n-1) + \ldots + D(n-m+1)).$$

In dem auf die oben beschriebene Weise erzeugten Ergebnisbild E(n) können erste Bildbereiche, deren Bildpunkte einen gleichen Helligkeitswert aufweisen, von zweiten Bildbereichen, deren Bildpunkte von den ersten Bildbereichen abweichenden Helligkeitswert aufweisen, unterschieden werden, indem eine Binärisierung des Ergebnisbildes E(n) mit einem geeigneten Schwellwert der Helligkeit erfolgt. In dem binärisierten Ergebnisbild BI(n) (vgl. Fig. 3) oder ggf. in dem Ergebnisbild E(n) selbst kann die (annähernd kreisförmige) Randkontur 9 mit Hilfe eines Algorithmus zur Konturerkennung, beispielsweise mit Hilfe eines Hough-Algorithmus, eines kleinsten Fehlerquadrat-Algorithmus oder ein RANSAC-Algorithmus, identifiziert werden.

Das oben beschriebene Verfahren kann hauptzeitparallel, d.h. während des mittels der Bearbeitungsmaschine 1 ausgeführten Laserbearbeitungsprozesses durchgeführt werden, sodass z.B. eine Veränderung der Geometrie der Öffnung 7 der Bearbeitungsdüse 6 durch eine Kollision der Bearbeitungsdüse 6 mit dem Werkstück 4 zeitnah erkannt und der Bearbeitungsprozesses frühzeitig unterbrochen werden und damit der Ausschuss verringert werden kann. Durch die vergleichende Auswertung kann die Genauigkeit bei der Identifizierung der Randkontur und deren Robustheit gegenüber Störungen der Abbildung (z.B. in Form von internen Reflexionen) erhöht werden. Auch kann das Verfahren mit Werkstücken bzw. Werkstück-Materialien mit unterschiedlicher Oberflächen-Beschaffenheit prozesssicher durchgeführt werden. Alternativ oder zusätzlich können mittels des oben beschriebenen Verfahrens die Randkonturen von anderen stationär an dem Bearbeitungskopf 3 gebildeten Geometrien bzw. Komponenten identifiziert werden, welche benachbart zu einer Öffnung angeordnet sind.

**Patentansprüche**

1.  Verfahren zum Identifizieren einer Randkontur (9) einer an einem Bearbeitungskopf (3) gebildeten Öffnung (7), insbesondere einer Öffnung (7) einer Bearbeitungsdüse (6), **gekennzeichnet durch**:

    zeitlich aufeinander folgendes Aufnehmen von mehreren Bildern (B(n), B(n-1),...), die jeweils einen Teilbereich (21) einer **durch** die Öffnung (7) hindurch beobachteten, vom Bearbeitungskopf (3) beabstandeten, bevorzugt beleuchteten Referenzfläche (8) sowie einen die Öffnung (7) umgebenden Bereich (22) an dem Bearbeitungskopf (3) enthalten, wobei zwischen Aufnahmezeitpunkten (n, n-1, ...) der Bilder (B(n), B(n-1), ...) die Helligkeitseigenschaften der Referenzfläche (8) verändert werden, sowie

    Identifizieren der Randkontur (9) **durch** vergleichendes Auswerten der aufgenommenen Bilder (B(n), B(n-1), ...).

2.  Verfahren nach Anspruch 1, **dadurch gekennzeichnet, dass** zum Verändern der Helligkeitseigenschaften die Referenzfläche (8) und der Bearbeitungskopf (3) insbesondere in einer Richtung (X, Y) quer zur Öffnung (7) relativ zueinander bewegt werden.

3.  Verfahren nach Anspruch 1 oder 2, **dadurch gekennzeichnet, dass** die Referenzfläche (8) eine Oberfläche eines zu bearbeitenden Werkstücks (4) ist.

4.  Verfahren nach einem der vorhergehenden Ansprüche, **dadurch gekennzeichnet, dass** zum Verändern der Helligkeitseigenschaften der Referenzfläche (8) die Beleuchtung der Referenzfläche (8) zeitlich verändert wird.

5.  Verfahren nach einem der vorhergehenden Ansprüche, **dadurch gekennzeichnet, dass** die Bilder (B(n), B(n-1), ...) entlang einer Beobachtungsrichtung (23) koaxial zu einem durch die Öffnung (7) hindurch tretenden Bearbeitungsstrahl, insbesondere einem Laserstrahl (2), aufgenommen werden.

6.  Verfahren nach einem der vorhergehenden Ansprüche, **dadurch gekennzeichnet, dass** die Beleuchtung der Referenzfläche (8) entlang einer Beleuchtungsrichtung (15) koaxial zu einem durch die Öffnung (7) hindurch tretenden Bearbeitungsstrahl, insbesondere einem Laserstrahl (2), erfolgt.

7.  Verfahren nach einem der vorhergehenden Ansprüche, **dadurch gekennzeichnet, dass** beim vergleichenden Auswerten mindestens ein Differenzbild (D(n)) aus jeweils zwei der aufgenommenen Bilder (B(n), B(n-1); B(n), B(n-2); B(n), B(n-3), ...) gebildet wird.

8.  Verfahren nach Anspruch 7, **dadurch gekennzeichnet, dass** die Bilder (B(n), B(n-1); B(n), B(n-2); B(n), B(n-3), ...) vor der Bildung des mindestens einen Differenzbildes D(n) mittels eines Bildverarbeitungsalgorithmus bearbeitet werden.

9.  Verfahren nach einem der Ansprüche 7 oder 8, **dadurch gekennzeichnet, dass** aus mindestens zwei der Differenzbilder (D(n), D(n-1), ...) ein Ergebnisbild (E(n)) erzeugt wird, an dem das Identifizieren der Randkontur (9) erfolgt.

10. Verfahren nach Anspruch 9, **dadurch gekennzeichnet, dass** das Ergebnisbild E(n) aus einer vorgegebenen Anzahl m an zu aufeinander folgenden Aufnahmezeitpunkten n, n-1, ..., n-m+1 aufgenommenen Bildern B(n) gemäß der Formel: $E(n) = B(n) - B(n-1) + B(n) - B(n-2) + ... + B(n-m+1)$ gebildet wird.

**11.** Verfahren nach Anspruch 9, **dadurch gekennzeichnet, dass** das Ergebnisbild (E(n)) als gleitender Mittelwert einer vorgegebenen Anzahl (m) von zu unterschiedlichen Aufnahmezeitpunkten (n, n-1, ...) aufgenommenen Differenzbildern (D(n), D(n-1), ...) erzeugt wird.

**12.** Verfahren nach Anspruch 9, **dadurch gekennzeichnet, dass** das Ergebnisbild E(n) gemäß der Formel: E(n) = $\alpha$*E(n-1) + (1-$\alpha$)*D(n) erzeugt wird, wobei $\alpha$ eine Konstante ist und einen Abklingfaktor $0<\alpha<1$ bezeichnet und D(n) ein Differenzbild bezeichnet.

**13.** Verfahren nach einem der Ansprüche 9 bis 12, **dadurch gekennzeichnet, dass** zum Identifizieren der Randkontur (9) das Ergebnisbild E(n) in ein Binärbild BI(n) umgewandelt wird.

**14.** Verfahren nach einem der Ansprüche 9 bis 13, **dadurch gekennzeichnet, dass** zum Identifizieren der Randkontur (9) in dem Ergebnisbild E(n) oder in dem Binärbild BI(n) ein Algorithmus zur Geometrie-Erkennung verwendet wird.

**15.** Verfahren nach einem der vorhergehenden Ansprüche, **dadurch gekennzeichnet, dass** zum Identifizieren der Randkontur (9) zwischen zehn und fünfzig Bilder (B(n), B(n-1), ...), bevorzugt zwischen zehn und vierzig Bilder (B(n), B(n-1), ...), aufgenommen werden.

**16.** Bearbeitungsmaschine (1), umfassend:

einen Bearbeitungskopf (3),
eine an einer Öffnung (7) an dem Bearbeitungskopf (3), insbesondere an einer Öffnung (7) einer an dem Bearbeitungskopf (3) angebrachten Bearbeitungsdüse (6), gebildete Randkontur (9),
eine Bilderfassungseinrichtung (13) zur zeitlich aufeinander folgenden Aufnahme von mehreren Bildern (B(n), B(n-1), ...), die jeweils einen Teilbereich (21) einer durch die Öffnung (7) hindurch beobachteten, zum Bearbeitungskopf (3) beabstandeten Referenzfläche (8) sowie einen die Öffnung (7) umgebenden Bereich (22) an dem Bearbeitungskopf (3) enthalten, sowie eine Auswerteeinrichtung (27) zur Identifikation der Randkontur (9) durch vergleichende Auswertung der aufgenommenen Bilder (B(n), B(n-1), ...), wobei die Bearbeitungsmaschine (1) ausgebildet ist, zwischen den Aufnahmezeitpunkten (n, n-1, ...) der Bilder (B(n), B(n-1), ...) die Helligkeitseigenschaften der Referenzfläche (8) zu verändern,
eine Beleuchtungseinrichtung (14) zur Beleuchtung der Referenzfläche (8) entlang einer Beleuchtungsrichtung (15) bevorzugt koaxial zu einem durch die Öffnung (7) hindurch tretenden Bearbeitungsstrahl, insbesondere einem Laserstrahl (2), mit Beleuchtungsstrahlung (16),
**dadurch gekennzeichnet,**
**dass** die Beleuchtungseinrichtung (14) zur zeitlichen Veränderung der Beleuchtungsintensität der Beleuchtungsstrahlung (16) ausgebildet ist.

**17.** Bearbeitungsmaschine nach Anspruch 16, bei der die Bilderfassungseinrichtung (13) eine Abbildungsoptik (19) zur Aufnahme der mindestens zwei Bilder (B(n), B(n-1), ...) aus einer Beobachtungsrichtung (23) bevorzugt koaxial zu einem durch die Öffnung (7) hindurch tretenden Bearbeitungsstrahl, insbesondere einem Laserstrahl (2), aufweist.

**18.** Bearbeitungsmaschine nach einem der Ansprüche 16 oder 17, weiter umfassend: eine Werkstückauflage (25) zur Auflage eines von dem Bearbeitungskopf (3) beabstandeten Werkstücks (4).

**19.** Bearbeitungsmaschine nach einem der Ansprüche 16 bis 18, weiter umfassend: eine Bewegungseinrichtung (24) zum Erzeugen einer Relativbewegung zwischen dem Werkstück (4) und dem Bearbeitungskopf (3).

**Claims**

**1.** Method for identifying an edge contour (9) of an opening (7) formed on a processing head (3), in particular an opening (7) of a processing nozzle (6), **characterised by**:

temporally successive recording of a plurality of images (B(n), B(n-1),...), which each contain a part-region (21) of a preferably illuminated reference face (8) which is monitored through the opening (7) and which is spaced apart from the processing head (3), and a region (22) on the processing head (3) which surrounds the opening (7), wherein between recording times (n, n-1,...) of the images (B(n), B(n-1),...) the brightness properties of the reference face (8) are changed, and

identifying the edge contour (9) by means of comparative evaluation of the recorded images (B(n), B(n-1),...).

2. Method according to claim 1, **characterised in that**, in order to change the brightness properties, the reference face (8) and the processing head (3) are moved relative to each other, in particular in a direction (X, Y) transverse relative to the opening (7).

3. Method according to claim 1 or claim 2, **characterised in that** the reference face (8) is a surface of a workpiece (4) which is intended to be processed.

4. Method according to any one of the preceding claims, **characterised in that**, in order to change the brightness properties of the reference face (8), the illumination of the reference face (8) is temporally changed.

5. Method according to any one of the preceding claims, **characterised in that** the images (B(n), B(n-1),...) are recorded in a monitoring direction (23) coaxial relative to a processing beam, in particular a laser beam (2), which passes through the opening (7).

6. Method according to any one of the preceding claims, **characterised in that** the illumination of the reference face (8) is carried out in an illumination direction (15) coaxial relative to a processing beam, in particular a laser beam (2), which passes through the opening (7).

7. Method according to any one of the preceding claims, **characterised in that** during the comparative evaluation at least one difference image (D(n)) is formed in each case from two of the recorded images (B(n), B(n-1); B(n), B(n-2); B(n), B(n-3),...) .

8. Method according to claim 7, **characterised in that** the images (B(n), B(n-1); B(n), B(n-2); B(n), B(n-3),...) are processed by means of an image processing algorithm before the at least one difference image D(n) is formed.

9. Method according to either claim 7 or claim 8, **characterised in that** a result image (E(n)) on which the identification of the edge contour (9) is carried out is produced from at least two of the difference images (D(n), D(n-1),...).

10. Method according to claim 9, **characterised in that** the result image E(n) is formed from a predetermined number m of images B(n) recorded at sequential recording times n, n-1,..., n-m+1 in accordance with the formula: $E(n) = B(n) - B(n-1) + B(n) - B(n-2) + ... + B(n-m+1)$ .

11. Method according to claim 9, **characterised in that** the result image (E(n)) is produced as a moving average of a predetermined number (m) of difference images (D(n), D(n-1),...) recorded at different recording times (n, n-1,...).

12. Method according to claim 9, **characterised in that** the result image E(n) is produced in accordance with the formula: $E(n) = \alpha*E(n-1) + (1-a)*D(n)$, where $\alpha$ is a constant and denotes a decay factor $0<\alpha<1$ and D(n) denotes a difference image.

13. Method according to any one of claims 9 to 12, **characterised in that**, in order to identify the edge contour (9), the result image E(n) is converted into a binary image BI(n).

14. Method according to any one of claims 9 to 13, **characterised in that** an algorithm for geometry recognition is used in order to identify the edge contour (9) in the result image E(n) or in the binary image BI(n).

15. Method according to any one of the preceding claims, **characterised in that**, in order to identify the edge contour (9), between ten and fifty images (B(n), B(n-1),...), preferably between ten and forty images (B(n), B(n-1),...) are recorded.

16. Processing machine (1) comprising:

a processing head (3),
an edge contour (9) which is formed at an opening (7) on the processing head (3), in particular at an opening (7) of a processing nozzle (6) which is fitted to the processing head (3),
an image detection device (13) for the temporally successive recording of a plurality of images (B(n), B(n-1),...) which each contain a part-region (21) of a reference face (8) which is monitored through the opening (7) and which is spaced apart from the processing head (3), and a region (22) on the processing head (3) which surrounds the opening (7), and

an evaluation device (27) for identifying the edge contour (9) by means of comparative evaluation of the recorded images (B(n), B(n-1),...), wherein the processing machine (1) is constructed to change the brightness properties of the reference face (8) between the recording times (n, n-1,..) of the images (B(n), B(n-1)...),

an illumination device (14) for illuminating the reference face (8) with illumination radiation (16) in an illumination direction (15) preferably coaxial relative to a processing beam, in particular a laser beam (2), which passes through the opening (7),

**characterised in that**

the illumination device (14) is constructed to temporally change the illumination intensity of the illumination radiation (16).

17. Processing machine according to claim 16, wherein the image detection device (13) has an optical imaging unit (19) for recording the at least two images (B(n), B(n-1),...) from a monitoring direction (23) preferably coaxial relative to a processing beam, in particular a laser beam (2), which passes through the opening (7).

18. Processing machine according to either claim 16 or claim 17, further comprising: a workpiece support (25) for supporting a workpiece (4) which is spaced apart from the processing head (3).

19. Processing machine according to any one of claims 16 to 18, further comprising: a movement device (24) for producing a relative movement between the workpiece (4) and the processing head (3).

**Revendications**

1. Procédé d'identification d'un profil marginal (9) d'une ouverture (7) pratiquée dans une tête d'usinage (3), notamment d'une ouverture (7) d'une buse d'usinage (6), **caractérisé par** :

un enregistrement, en succession dans le temps, de plusieurs images [B(n), B(n-1),...] contenant, à chaque fois, une région partielle (21) d'une surface de référence (8) préférentiellement éclairée, placée à distance de la tête d'usinage (3) et observée à travers l'ouverture (7), de même qu'une région (22) située sur ladite tête d'usinage (3) et entourant ladite ouverture (7), sachant que les propriétés de brillance de ladite surface de référence (8) sont modifiées entre des instants (n, n-1,...) d'enregistrement desdites images [B(n), B(n-1),...], ainsi que par

une identification du profil marginal (9) par évaluation comparative des images [B(n), B(n-1),...] enregistrées.

2. Procédé selon la revendication 1, **caractérisé par le fait que**, pour modifier les propriétés de brillance, la surface de référence (8) et la tête d'usinage (3) sont mises en mouvement l'une vis-à-vis de l'autre, en particulier dans une direction (X, Y) transversale par rapport à l'ouverture (7).

3. Procédé selon la revendication 1 ou 2, **caractérisé par le fait que** la surface de référence (8) est une surface d'une pièce (4) à usiner.

4. Procédé selon l'une des revendications précédentes, **caractérisé par le fait que**, pour modifier les propriétés de brillance de la surface de référence (8), l'éclairage de ladite surface de référence (8) est modifié dans le temps.

5. Procédé selon l'une des revendications précédentes, **caractérisé par le fait que** les images [B(n), B(n-1),...] sont enregistrées le long d'une direction d'observation (23), coaxialement par rapport à un faisceau d'usinage, en particulier à un faisceau laser (2) traversant l'ouverture (7) de part en part.

6. Procédé selon l'une des revendications précédentes, **caractérisé par le fait que** l'éclairage de la surface de référence (8) est effectué le long d'une direction d'éclairage (15), coaxialement par rapport à un faisceau d'usinage, en particulier à un faisceau laser (2) traversant l'ouverture (7) de part en part.

7. Procédé selon l'une des revendications précédentes, **caractérisé par le fait qu'**au moins une image différentielle [D(n)] est formée, lors de l'évaluation comparative, à partir de deux images respectives au sein des images [B(n), B(n-1) ; B(n), B(n-2) ; B(n), B(n-3),...] enregistrées.

8. Procédé selon la revendication 7, **caractérisé par le fait que** les images [B(n), B(n-1) ; B(n), B(n-2); B(n), B(n-3),...] sont traitées, au moyen d'un algorithme d'imagerie, préalablement à la formation de l'image différentielle [D(n)] à présence minimale.

9. Procédé selon l'une des revendications 7 ou 8, **caractérisé par le fait qu'**une image résultante [E(n)], sur laquelle l'identification du profil marginal (9) est opérée, est engendrée à partir d'au moins deux images au sein des images différentielles [D(n), D(n-1),...].

10. Procédé selon la revendication 9, **caractérisé par le fait que** l'image résultante [E(n)] est formée à partir d'un nombre préétabli m d'images [B(n)] enregistrées à des instants d'enregistrement (n, n-1,..., n-m+1) se succédant mutuellement, en conformité avec la formule : E(n) = B(n) - B(n-1) + B(n) - B(n-2) +...+ B(n-m+1).

11. Procédé selon la revendication 9, **caractérisé par le fait que** l'image résultante [E(n)] est engendrée en tant que valeur moyenne glissante d'un nombre préétabli (m) d'images différentielles (D(n), D(n-1),...] enregistrées à des instants d'enregistrement (n, n-1,...) différents.

12. Procédé selon la revendication 9, **caractérisé par le fait que** l'image résultante [E(n)] est engendrée en conformité avec la formule : $E(n) = \alpha*E(n-1) + (1-\alpha)*D(n)$, sachant que $\alpha$ est une constante et désigne un facteur de décroissance $0 < \alpha < 1$, et D(n) désigne une image différentielle.

13. Procédé selon l'une des revendications 9 à 12, **caractérisé par le fait que**, pour identifier le profil marginal (9), l'image résultante [E(n)] est convertie en une image binaire [BI(n)].

14. Procédé selon l'une des revendications 9 à 13, **caractérisé par le fait que**, pour identifier le profil marginal (9), un algorithme affecté à la reconnaissance géométrique est utilisé dans l'image résultante [E(n)] ou dans l'image binaire [BI(n)].

15. Procédé selon l'une des revendications précédentes, **caractérisé par le fait qu'**entre dix et cinquante images [B(n), B(n-1),...], de préférence entre dix et quarante images[B(n), B(n-1),...], sont enregistrées en vue d'identifier le profil marginal (9).

16. Machine d'usinage (1) comprenant :

   une tête d'usinage (3),
   un profil marginal (9) formé au niveau d'une ouverture (7) pratiquée dans ladite tête d'usinage (3), notamment d'une ouverture (7) d'une buse d'usinage (6) installée sur ladite tête d'usinage (3),
   un dispositif (13) d'acquisition d'images conçu pour enregistrer, en succession dans le temps, plusieurs images [B(n), B(n-1),...] contenant, à chaque fois, une région partielle (21) d'une surface de référence (8) placée à distance de la tête d'usinage (3) et observée à travers l'ouverture (7), de même qu'une région (22) située sur ladite tête d'usinage (3) et entourant ladite ouverture (7), ainsi
   qu'un dispositif d'évaluation (27) conçu pour identifier le profil marginal (9) par évaluation comparative des images [B(n), B(n-1),...] enregistrées, ladite machine d'usinage (1) étant réalisée en vue de modifier les propriétés de brillance de la surface de référence (8) entre les instants (n, n-1,...) d'enregistrement desdites images [B(n), B(n-1),...],
   un dispositif d'éclairage (14) conçu pour éclairer ladite surface de référence (8) par un rayonnement d'éclairage (16) le long d'une direction d'éclairage (15), de préférence coaxialement par rapport à un faisceau d'usinage, en particulier à un faisceau laser (2) traversant l'ouverture (7) de part en part,
   **caractérisée par le fait**
   **que** le dispositif d'éclairage (14) est réalisé en vue de modifier, dans le temps, l'intensité d'éclairement du rayonnement d'éclairage (16).

17. Machine d'usinage selon la revendication 16, dans laquelle le dispositif (13) d'acquisition d'images est muni d'une optique d'imagerie (19) conçue pour enregistrer les deux images [B(n), B(n-1),...] à présence minimale, à partir d'une direction d'observation (23), de préférence coaxialement par rapport à un faisceau d'usinage, en particulier à un faisceau laser (2) traversant l'ouverture (7) de part en part.

18. Machine d'usinage selon l'une des revendications 16 ou 17, comprenant en outre : un support (25) de pièces, conçu pour offrir un appui à une pièce (4) située à distance de la tête d'usinage (3).

**19.** Machine d'usinage selon l'une des revendications 16 à 18, comprenant par ailleurs : un dispositif (24) de mise en mouvement, conçu pour engendrer un mouvement relatif entre la pièce (4) et la tête d'usinage (3).

Fig. 1

**Fig. 2**

**Fig. 3**

**IN DER BESCHREIBUNG AUFGEFÜHRTE DOKUMENTE**

**In der Beschreibung aufgeführte Patentdokumente**

- US 2013319980 A1
- DE 4336136 A1
- EP 1600247 A2
- DE 102005010381